(19) Europäisches Patentamt European Patent Office Office européen des brevets

(11) **EP 3 330 584 B1**

(12) **EUROPEAN PATENT SPECIFICATION**

(45) Date of publication and mention of the grant of the patent:
**19.02.2020 Bulletin 2020/08**

(51) Int Cl.:
***F16K 31/06*** *(2006.01)*    ***H01F 7/16*** *(2006.01)*

(21) Application number: **16900184.9**

(22) Date of filing: **19.10.2016**

(86) International application number:
**PCT/CN2016/102479**

(87) International publication number:
**WO 2017/185676 (02.11.2017 Gazette 2017/44)**

(54) **SELF-LOCKING VALVE DRIVEN BY MICROMINIATURE SINGLE-COIL**

SELBSTSCHLIESSENDES VENTIL MIT MIKROMINIATUR-EINZELSPULE

VANNE À AUTO-VERROUILLAGE ACTIONNÉE PAR UNE BOBINE SIMPLE MICROMINIATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2016 CN 201610268235**

(43) Date of publication of application:
**06.06.2018 Bulletin 2018/23**

(73) Proprietor: **Beijing Institute of Control Engineering Beijing 100094 (CN)**

(72) Inventors:
• **GOU, Haoliang**
  **Beijing 100094 (CN)**
• **ZHANG, Bing**
  **Beijing 100094 (CN)**
• **LIU, Hui**
  **Beijing 100094 (CN)**

(74) Representative: **Potter Clarkson**
  **The Belgrave Centre**
  **Talbot Street**
  **Nottingham NG1 5GG (GB)**

(56) References cited:
**CN-A- 1 521 773         CN-A- 1 521 773**
**CN-A- 105 736 800      CN-B- 102 052 486**
**CN-U- 201 866 259      CN-U- 202 230 823**
**CN-Y- 2 387 346         DE-A1- 19 836 516**
**JP-U- H 031 375          JP-U- S5 836 680**
**JP-U- S61 172 269       US-A- 4 682 135**
**US-A1- 2016 064 133**

## Description

This application claims priority to Chinese Patent Application No. 201610268235.8, titled "MICROMINIATURE MONOCOIL DRIVEN LATCHING VALVE", filed with the Chinese State Intellectual Property Office on April 27, 2016.

## FIELD

The present application relates to a microminiature monocoil driven latching valve, which belongs to the technical field of space fluid management of spacecraft.

## BACKGROUND

A latching valve, as a management valve of the propulsion system, mainly performs the on-off control of the propellant in the system and is one of the important components of the system, and currently the microsatellites and nanosatellites, due to their characteristics of small volume and light weight, require a weight of the latching valve to be below 50g or even below 30g.

The conventional latching valve generally employs two coils to respectively perform the drive control of valve opening and closing states. Moreover, in order to ensure the reliability of products, a flexible supporting element is generally employed to provide a suspension support at two ends of the armature. Such a structure has a large number of parts and a complex structure and thus cannot be implemented in a microminiature latching valve. In order to solve the contradiction between miniaturization design of the latching valve and the reliability of products, the miniaturization design and structural improvement must be carried out to meet the requirements of high integration, small size, light weight and high reliability of the system.

Furthermore, the current high-performance electric valve generally adopts an armature flexible suspension design solution, the core component of which is a sheet-shape diaphragm spring. Such a structure generally has multiple parts, the number of which is more than 5, the connection is complex and generally needs to employ the process such as electron beam welding or laser welding, thus the production process is complex. More importantly, due to the limit of processing factors, it is difficult or even impossible to apply the sheet-shape diaphragm spring in a valve with a small radial dimension, such as a valve having a radial dimension< 10mm

JPS5836680U discloses a prior art monocoil driven latching valve.

## SUMMARY

An object of the present application is to overcome the above-mentioned drawbacks of the conventional technology, to provide a microminiature monocoil driven latching valve, the structural design of which greatly reduces the weight and volume of the product and reduces the number of parts, so that the latching valve is more compact in the overall structure and has a lighter weight, and ultimately the miniaturization design of the product is achieved and high reliability and rapid response characteristics of the product are also ensured.

The above object of the present application is mainly achieved by the following technical solutions.

A microminiature monocoil driven latching valve, includes an armature assembly, a valve body, a magnetic steel and coils. The armature assembly is arranged in an inner cavity of the valve body, and the armature assembly includes an armature and a ball. Each of the armature and the valve body is of a revolving body structure, and the ball is a spherical ball. N grooves are arranged at portions in a circumference direction close to an end surface of each of two ends of the armature to be uniformly distributed along the circumference direction. One ball is provided in each of the grooves. The groove has a combination shape of a spherical segment of a hollow structure with a cylinder. The spherical segment has a diameter equal to a diameter of the cylinder, and the ball has a diameter less than the diameter of the spherical segment or the cylinder in the groove and greater than a depth of the groove; the ball is made of a non-magnetic material having a hardness HRC>58, where N is a positive integer and N$\geq$3; and

the magnetic steel is sleeved on a circumferential surface of the valve body to divide the circumferential surface of the valve body into two areas, and two coils are wound in the two areas respectively and are connected in series into one coil.

In the above-mentioned microminiature monocoil driven latching valve, the diameter of the ball and the depth of the groove satisfy a relationship:

$$\frac{\text{the diameter of the ball } - \text{ the depth of the groove}}{\text{the diameter of the ball}} \times 100\% = 5\% \sim 30\%.$$

In the above-mentioned microminiature monocoil driven latching valve, the diameter of the ball and the depth of the groove satisfy a relationship:

$$\frac{\text{the diameter of the ball} - \text{the depth of the groove}}{\text{the diameter of the ball}} \times 100\% = 5\% \sim 15\%.$$

In the above-mentioned microminiature monocoil driven latching valve, the spherical segment of the hollow structure has a height ranging from 2/5 to 3/5 of the diameter of the ball.

In the above-mentioned microminiature monocoil driven latching valve, the ball is a silicon nitride ceramic ball.

In the above-mentioned microminiature monocoil driven latching valve, the magnetic steel is divided into M magnetic steel sections having equal radians around the surface of the valve body. The M magnetic steel sections are evenly distributed around the surface of the valve body. The two coils located on two sides of the magnetic steel are connected in series into one coil at a gap between adjacent two magnetic steel sections, where M is a positive integer and M≥3.

In the above-mentioned microminiature monocoil driven latching valve, a radian of each of the M magnetic steel sections ranges from 55 degrees to 65 degrees, and the number of the M magnetic steel sections ranges from 3 to 5.

In the above-mentioned microminiature monocoil driven latching valve, the magnetic steel is provided at a middle position in an axial direction of the valve body, and a width of the magnetic steel in the axial direction of the valve body ranges from 1mm to 3mm.

In the above-mentioned microminiature monocoil driven latching valve, the diameter of the ball and the diameter of the spherical segment of the groove satisfy a relationship:

$$\frac{\text{the diameter of the spherical segment} - \text{the diameter of the ball}}{\text{the diameter of the ball}} \times 100\% = 5\% \sim 25\%$$

In the above-mentioned microminiature monocoil driven latching valve, bottom center points of the N grooves are in the same plane, and the plane is perpendicular to an axis of the armature. A distance from the bottom center point of each of the N grooves to the end surface, close to the respective grooves, of the armature ranges from 5% to 25% of an axial length of the armature.

In the above-mentioned microminiature monocoil driven latching valve, three grooves uniformly distributed along the circumference direction are arranged at portions in the circumference direction close to the end surface of each of the two ends of the armature.

In the above-mentioned microminiature monocoil driven latching valve, the armature assembly is provided in the inner cavity of the valve body, and a sliding fit clearance ranging from 0.03mm to 0.08 mm is formed between the ball and an inner wall of the inner cavity of the valve body.

The present application has the following beneficial effects compared with the conventional technology:

(1). The latching valve according to the preset application employs the magnetic steel (i.e., a permanent magnet) to achieve the final command state holding function of the valve, further, the magnetic circuit is offset and thus has a polarity, and then the switching between the opening command state and the closing command state is achieved by using an excitation coil and inputting a drive signal having a certain pulse width and different polarities to the excitation coil. In such a structural design, by connecting the coils located on two sides of the magnetic steel in series into one monocoil, the control of the switching between the opening and the closing of the valve is achieved. The window size of the coil required is reduced by 1/2 compared with a conventional double coil latching valve under the same number of ampere-turns. Thus the weight and volume of the product in structure are greatly reduced.

(2). In the ball support-type electric valve armature suspension structure employed in the latching valve according to the present application, N specially shaped grooves are arranged uniformly at each of the two ends of the armature in the circumferential direction. One silicon nitride ceramic ball is placed in each of the grooves to form an armature assembly. The groove has a depth less than the diameter of the employed ball to ensure that the diameter of the circumference formed from the ball is greater than the circumferential diameter of the armature. Finally, a sliding fit is employed between the circumference with the diameter determined by the ball and the inner cavity of the valve to ensure that the sliding friction doses not occur between the armature and the valve body during the movement of the armature, so that the ball is at a rolling state rather than a relatively static state. Further, in the movement process of the armature, due to the ball is made of the non-magnetic material, the friction between the ball and the body and the armature are rolling friction, the value of the frictional force is slight and generally negligible, and the valve will not cause the "self-contamination" phenomenon due to sliding friction.

(3). The ball support-type electric valve armature suspension structure according to the present application eliminates the use of the flexible support element in design of the traditional armature suspension structure, simplifies the armature structure and reduces the number of parts, so that the armature structure is more compact in structure and has a smaller weight, and ultimately the high reliability and rapid response characteristics of the product are ensured while the miniaturized design of the product is achieved.

(4). In the present application, by the optimal design of the position and shape of the groove in the armature assembly and the ratio relationship of the groove with the ball, the armature suspension structure is enabled to have a more excellent structural performance, and a more reasonable and compact structure, thus further ensuring the high reliability and the rapid response characteristics of the armature suspension structure; with such a ball support suspension structure according to the present application being employed, the valve response time can be shortened by 15% to 30%, and the divergence of the valve response time can be controlled within ± 0.1ms.

(5). In the latching valve according to the present application, by the well design of magnetic steel structure and the optimization of the shape and size of the magnet steel structure, the coils located on two sides of the magnetic steel are skillfully connected in series together to form one monocoil, so that the volume and weight of the latching valve are greatly reduced while the high reliability of the product is ensured.

## BRIEF DESCRIPTION OF THE DRAWINGS

Figure 1 is a sectional view of a three-dimensional structure of a monocoil driven latching valve according to the present application;

Figure 2 is a structural sectional view of the monocoil driven latching valve according to the present application;

Figure 3 is a schematic view showing a sectioned structure of a magnetic steel according to the present application;

Figure 4a is a longitudinal structural sectional view of an armature assembly according to the present application;

Figure 4b is a transversal structural sectional view of the armature in the armature assembly according to the present application (a sectional view taken along the section line in Figure 4a)

Figure 5 is a schematic view of an armature suspension structure according to the present application.

Figure 6a is a view of a drive signal of the monocoil driven latching valve according to the present application; and

Figure 6b is a current characteristic curve of the opening and closing process of the monocoil driven latching valve according to the present application.

## DETAILED DESCRIPTION

The present application is further described in detail with reference to the drawings and embodiments.

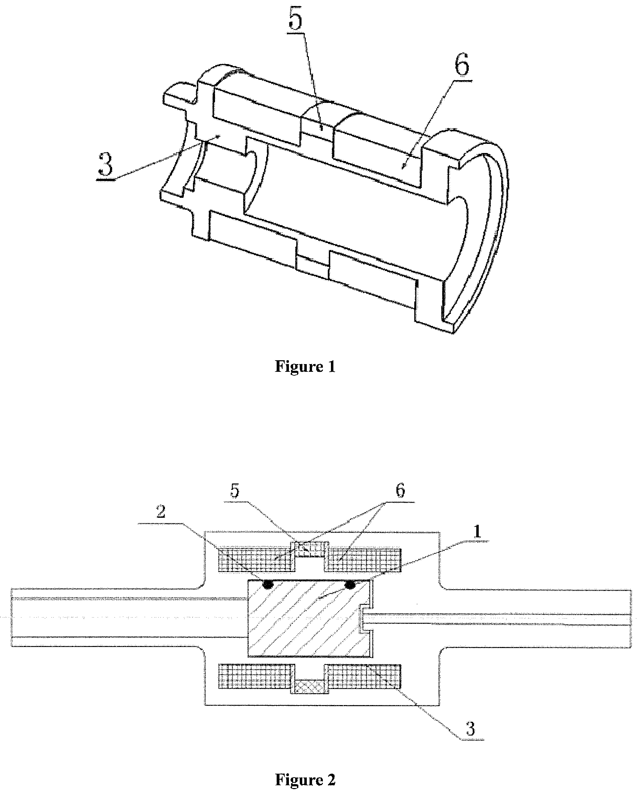

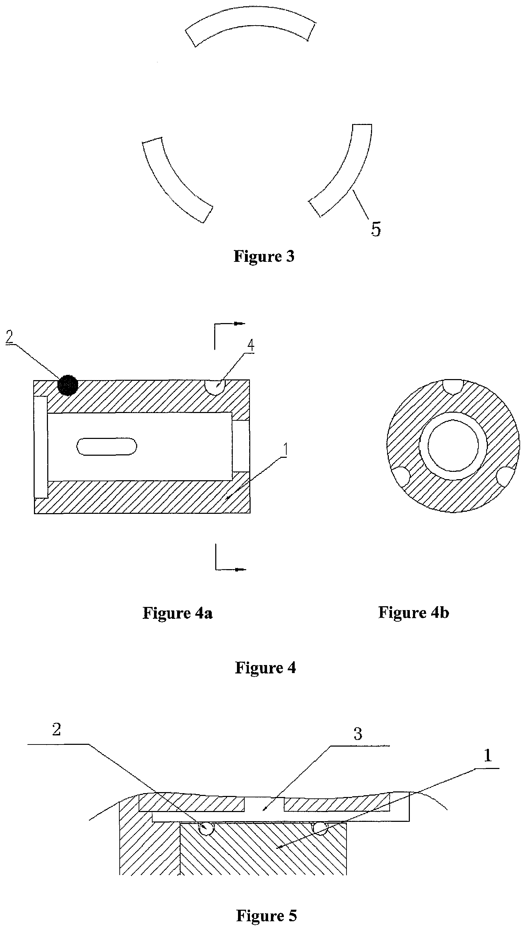

Figure 1 is a sectional view of a three-dimensional structure of a monocoil driven latching valve according to the present application. Figure 2 is a structural sectional view of the monocoil driven latching valve according to the present application. The microminiature monocoil driven latching valve according to the present application includes an armature assembly, a valve body 3, a magnetic steel 5 and coils 6. The armature assembly and the valve body 3 constitute an armature suspension structure. The magnetic steel 5 is sleeved on a circumferential surface of the valve body 3, to divide the circumferential surface of the valve body 3 into two areas, and two coils 6 are wound in the two areas respectively and are connected in series into one coil. The magnetic steel 5 is divided into M magnetic steel sections having equal radians around the surface of the valve body 3, and the M magnetic steel sections are evenly distributed around the surface of the valve body 3. The M magnetic steel sections are in the same plane which is perpendicular to an axis of the valve body 3. Figure 3 is a schematic view showing a sectioned structure of a magnetic steel according to the present application (in Figure 3, the magnetic steel is sectioned into 3 sections). The magnetic steel 5 is arranged at a middle position of the valve body in an axial direction of the valve body 3, and a width of the magnetic steel 5 in the axial direction of the valve body 3 is from 1mm to 3mm. The two coils 6 located on two sides of the magnetic steel 5 are connected in series into one coil at a gap between adjacent two magnetic steel sections 5, where M is a positive integer and M≥3.

The radian of each section of the M magnetic steels 5 ranges from 55 degrees to 65 degrees, and the number of the magnetic steel sections ranges from 3 to 5.

The structural design of the microminiature monocoil driven latching valve according to the present application, as shown in Figure 2, employs the magnetic steel (i.e., a permanent magnet) to achieve a final command state holding function of the valve, and meanwhile the magnetic circuit is offset and thus has a polarity, and then the switching between the opening command state and the closing command state is achieved by using an excitation coil and inputting a drive signal having a certain pulse width and different polarities to the excitation coil, which is specifically described as follows. The latching valve coil leads out two lines marked as A and B, of which end B is always grounded. After a positive pulse having a certain amplitude and pulse width is inputted to the coil, the valve is opened, and the position of the valve in the opening state is maintained by magnetic potential provided by the magnetic steel after poweroff; when to close the valve, a negative pulse having a certain amplitude and pulse width is inputted to the coil to achieve the closing of the valve, and similarly, the position of the valve in the closing state is maintained by the magnetic potential provided by the magnetic steel after poweroff. In this structural design, by connecting the coils located on two sides of the magnetic steel in series to form one monocoil, a window size of the coil required is reduced by 1/2 compared with a conventional double-coil latching valve with the same number of ampere-turns, that is, the window size of the coils located on the two sides in design is equal to the size of one coil of the conventional latching valve. Thus the weight and volume of the product are greatly reduced in structure.

Figure 5 is a schematic view of an armature suspension structure according to the present application. The armature assembly is provided in an inner cavity of the valve body 3. The armature assembly includes an armature 1 and a ball 2, and each of the armature 1 and the valve body 3 is of a revolving body structure, which is generally machined by the conventional turning method. The ball 2 is a spherical ball. N grooves 4 uniformly distributed along the circumference direction are provided in portions in a circumference direction close to an end surface of each of two ends of the armature 1. One ball 2 is provided in each of the grooves 4. The grooves 4 may be obtained by using a laser engraving method.

As shown in Figure 4, Figure 4a is a longitudinal structural sectional view of an armature assembly according to the present application, and Figure 4b is a transversal structural sectional view of an armature in the armature assembly according to the present application (a sectional view taken along a section line in Figure 4a). The groove 4 has a combination shape of a spherical segment of a hollow structure with a cylinder. A diameter of the spherical segment is equal to that of the cylinder, and a diameter of the ball 2 is less than that of the spherical segment or the cylinder of the groove 4 and greater than the depth of the groove 4, and satisfies:

$$\frac{\text{the diameter of the ball } - \text{ the depth of the groove}}{\text{the diameter of the ball}} \times 100\% = 5\% \sim 30\%,$$

and preferably satisfies:

$$\frac{\text{the diameter of the ball } - \text{ the depth of the groove}}{\text{the diameter of the ball}} \times 100\% = 5\% \sim 15\%.$$

The spherical segment of the hollow structure has a height ranging from 2/5 to 3/5 of the diameter of the ball 2. The diameter of the ball 2 and the diameter of the spherical segment (the cylinder) of the groove 4 satisfy a relationship:

$$\frac{\text{the diameter of the spherical segment } - \text{ the diameter of the ball}}{\text{the diameter of the ball}} \times 100\% = 5\% \sim 25\%.$$

and preferably satisfy:

$$\frac{\text{the diameter of the spherical segment } - \text{ the diameter of the ball}}{\text{the diameter of the ball}} \times 100\% = 10\% \sim 20\%.$$

Bottom center points of the N grooves 4 are in the same plane which is perpendicular to an axis of the armature 1, and a distance from the bottom center point of each of the N grooves 4 to the end face, close to the respective groove 4, of the armature 1 ranges from 5% to 25% of an axial length of the armature; the armature assembly is arranged in the inner cavity of the valve body 3, and a sliding fit clearance ranging from 0.03mm to 0.08mm is formed between the ball 2 and an inner wall of the cavity of the valve body 3.

The ball 2 is made of a non-magnetic material having a hardness HRC>58, and for example, is a silicon nitride ceramic ball. The materials of the armature and the valve body are both soft magnetic alloy. The material of the magnetic steel is NdFeB or samarium cobalt alloy.

**First Embodiment**

The magnetic steel 5 is sleeved on the circumferential surface of the valve body 3, to divide the circumferential surface of the valve body 3 into two areas. The two coils 6 are wound in the two areas respectively, and are connected in series into one coil. The number of turns of the one coil is 800. The magnetic steel 5 is divided into 3 magnetic steel sections having the equal radians around the surface of the valve body 3, and the 3 magnetic steel sections are evenly distributed around the surface of the valve body 3, and the radian of each of the 3 magnetic steel sections is 60 degrees, as shown in Figure 3. The magnetic steel 5 is arranged at a middle position of the valve body in the axial direction of the valve body 3, and a width of the magnetic steel 5 in the axial direction of the valve body 3 is 2mm. The two coils 6 located on two sides of the magnetic steel 5 are connected in series into one coil at a gap between adjacent two magnetic steel sections.

As shown in Figures 4a and 4b, each of the armature 1 and the valve body 3 is of a revolving body structure, which is machined by the conventional turning method. In addition, three grooves 4 uniformly distributed are machined at each of the two ends of the armature 1 in the circumferential direction thereof by laser engraving method. The groove 4 has a combination shape of a hollow hemispheroid and a cylinder. The hollow hemispheroid or the cylinder has a diameter d of 1.2mm, the cylinder has a height h of 0.3mm, and a depth of the groove 4 is d/2 + h=0.9mm. One silicon nitride ceramic ball 2 is arranged in each of the grooves 4. The ball 2 has a diameter D of 1mm, and D is smaller than d and greater than h. The ball 2 is arranged in the groove 4, and a height of a portion, protruding from the groove 4, of the ball 2 is D-h=0.1mm. The ball 2 and the armature 1 form the armature assembly. A sliding fit clearance of 0.06mm is formed between the ball 2 and an inner wall of the inner cavity of the valve body 3 after the armature assembly is placed into the inner cavity of the valve body 3. Bottom center points of the three grooves 4 close to each of two ends of the armature 1 are in the same plane, and the plane is perpendicular to the axis of the armature 1. A distance from the bottom center point of the groove 4 to the end face, close to the groove 4, of the armature 1 is 2mm, which is 7% of an axial length of the armature 2.

In this embodiment, a "self-contamination" phenomenon caused by sliding friction may not occur to the valve, and the flexible support element adopted in design of the traditional armature suspension structure is omitted, thus simplifying the armature structure, and reducing the number of parts. The window size required for the coil is reduced by 1/2, such that the latching valve is more compact in structure and has a smaller volume and lighter weight, and ultimately the high reliability and rapid response characteristics of the product are ensured while the miniaturization of the product is achieved.

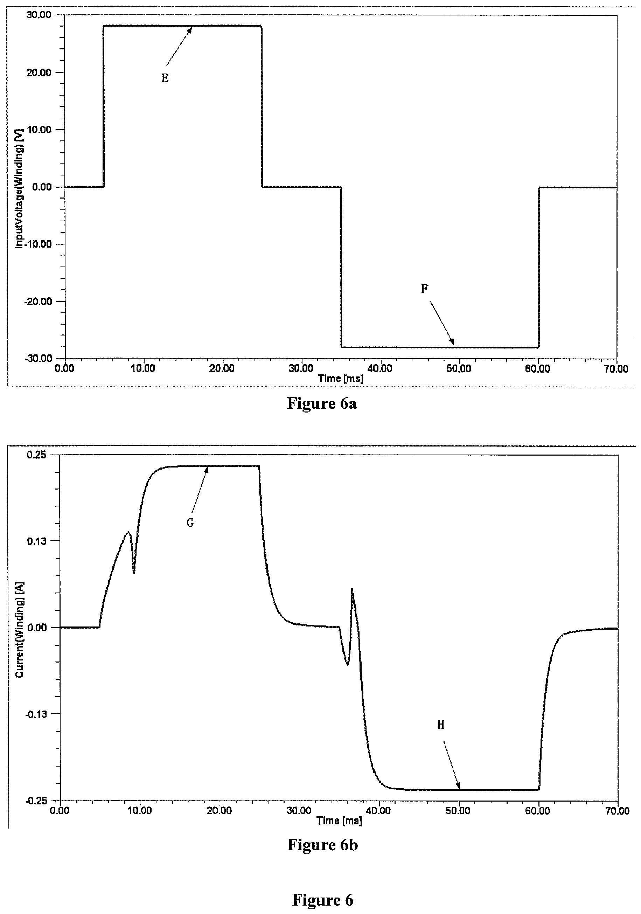

Figure 6a is a view showing a drive signal of the monocoil driven latching valve according to the present application; Figure 6b shows a current characteristic curve of the opening and closing process of the monocoil driven latching valve according to the present application. E in Figure 6a indicates "opening drive signal", F indicates "closing drive signal", G in Figure 6b indicates "a current characteristic curve of the opening process of the monocoil driven latching valve", and H indicates "a current characteristic curve of the closing process of the monocoil driven latching valve". Firstly, it is known from Figure 6a and Figure 6b that the monocoil latching valve design is feasible. Secondly, it is known from Figure 1 that since the monocoil design is employed, the window size of winding of the valve is reduced by half, and the corresponding volume and weight are reduced by half. Moreover, it is known from Figures 4 and 5 that the use of the ball support structure is not limited by the size of the armature volume, and is conducive to the miniaturization design of the product. In addition, due to the application of the ball support, the original sliding friction having a larger contact area and a lager frictional force value between two parts is converted into a linear rolling friction having a negligible frictional force. Thus the frictional force which is time-varying and non-linear and needs to be overcome during the opening and closing of the valve can be eliminated, and reduce of the valve response time and improving of the valve response time consistency can be facilitated. By employing such a ball support suspension structure, the valve response time can be reduced by 15% to 30%, and the divergence of the valve response time can be controlled within ± 0.1ms. Finally, due to the elimination of the sliding friction, the "self-contamination" of the valve caused by the extra substance generated during the movement of the moving parts due to the sliding friction is eliminated, and ultimately the reliability of the latching valve product is improved.

**Claims**

1. A microminiature monocoil driven latching valve, comprising:

   an armature assembly,
   a valve body (3),
   a magnetic steel (5), and
   coils (6), wherein
   the armature assembly is arranged in an inner cavity of the valve body (3), and the armature assembly comprises an armature (1) and a ball (2), wherein each of the armature (1) and the valve body (3) is of a revolving body structure, the ball (2) is a spherical ball;
   portions in a circumference direction close to an end surface of each of two ends of the armature (1) are provided with N grooves (4) uniformly distributed along the circumference direction, one ball (2) is arranged in each of the grooves (4);
   each of the grooves (4) has a combination shape of a spherical segment of a hollow structure and a cylinder, the spherical segment has a diameter equal to a diameter of the cylinder, and the ball (2) has a diameter less than the diameter of the spherical segment or the cylinder in the groove (4) and greater than a depth of the groove (4);
   the ball (2) is made of a non-magnetic material having a hardness HRC>58, wherein N is a positive integer and N≥3; and
   the magnetic steel (5) is sleeved on a circumferential surface of the valve body (3) to divide the circumferential surface of the valve body (3) into two areas, and two coils (6) are wound in the two areas respectively and are connected in series into one coil.

2. The microminiature monocoil driven latching valve according to claim 1, wherein the diameter of the ball (2) and the depth of the groove (4) satisfy a relationship:

$$\frac{\text{the diameter of the ball} - \text{the depth of the groove}}{\text{the diameter of the ball}} \times 100\% = 5\% \sim 30\%.$$

3. The microminiature monocoil driven latching valve according to claim 2, wherein the diameter of the ball (2) and the depth of the groove (4) satisfy a relationship:

$$\frac{\text{the diameter of the ball} - \text{the depth of the groove}}{\text{the diameter of the ball}} \times 100\% = 5\% \sim 15\%.$$

4. The microminiature monocoil driven latching valve according to claim 1, wherein the spherical segment of the hollow structure has a height ranging from 2/5 to 3/5 of the diameter of the ball.

5. The microminiature monocoil driven latching valve according to claim 1, wherein the ball (2) is a silicon nitride ceramic ball.

6. The microminiature monocoil driven latching valve according to claim 1, wherein the magnetic steel (5) is divided into M magnetic steel sections having equal radians around a surface of the valve body (3), and the M magnetic steel sections are evenly distributed around the surface of the valve body (3), the two coils (6) located on two sides of the magnetic steel (5) are connected in series into one coil at a gap between adjacent two magnetic steel sections, wherein M is a positive integer and M≥3.

7. The microminiature monocoil driven latching valve according to claim 6, wherein a radian of each of the M magnetic steel sections ranges from 55 degrees to 65 degrees, and the number of the magnetic steel sections ranges from 3 to 5.

8. The microminiature single-coil driven latching valve according to any one of claims 1 to 7, wherein the magnetic steel (5) is provided at a middle position in an axial direction of the valve body (3), and a width of the magnetic steel (5) in the axial direction of the valve body (3) ranges from 1mm to 3mm.

9. The microminiature monocoil driven latching valve according to claim 1, wherein the diameter of the ball (2) and the diameter of the spherical segment in the groove (4) satisfy a relationship:

$$\frac{\text{the diameter of the spherical segment } - \text{ the diameter of the ball}}{\text{the diameter of the ball}} \times 100\% = 5\% \sim 25\%.$$

10. The microminiature monocoil driven latching valve according to claim 1, wherein bottom center points of the N grooves (4) are in a same plane, and the plane is perpendicular to an axis of the armature (1), and a distance from the bottom center points of the N grooves (4) to the end surface, close to the respective grooves, of the armature (1) ranges from 5% to 25% of an axial length of the armature (1).

11. The microminiature monocoil driven latching valve according to any one of claims 1 to 7, 9 and 10, wherein three grooves (4) uniformly distributed along the circumference direction are arranged at portions in the circumference direction close to the end surface of each of the two ends of the armature (1).

12. The microminiature monocoil driven latching valve according to any one of claims 1 to 7, 9 and 10, wherein the armature assembly is provided in the inner cavity of the valve body (3), and a sliding fit clearance ranging from 0.03mm to 0.08mm is formed between the ball (2) and an inner wall of the inner cavity of the valve body (3).

**Patentansprüche**

1. Mikrominiatur-Verriegelungsventil mit Monospule, das Folgendes umfasst:

    eine Ankerbaugruppe,
    einen Ventilkörper (3),
    einen magnetischen Stahl (5) und
    Spulen (6), wobei
    die Ankeranordnung in einem inneren Hohlraum des Ventilkörpers (3) angeordnet ist, und die Ankeranordnung einen Anker (1) und eine Kugel (2) umfasst, wobei sich sowohl der Anker (1) als auch der Ventilkörper (3) eine Rotationskörperstruktur aufweist, wobei die Kugel (2) eine kugelförmige Kugel ist;
    Abschnitte in Umfangsrichtung nahe einer Endfläche von jedem der zwei Enden des Ankers (1) mit N Nuten (4) versehen sind, die gleichmäßig entlang der Umfangsrichtung verteilt sind, wobei eine Kugel (2) in jeder der Nuten (4) angeordnet ist;
    jede der Nuten (4) eine kombinierte Form eines kugelförmigen Segments einer Hohlstruktur und eines Zylinders aufweist, das kugelförmige Segment einen Durchmesser aufweist, der einem Durchmesser des Zylinders entspricht, und die Kugel (2) einen Durchmesser aufweist, der kleiner als der Durchmesser des Kugelsegments oder des Zylinders in der Nut (4) und größer als eine Tiefe der Nut (4) ist;
    die Kugel (2) aus einem nichtmagnetischen Material mit einer Härte HRC > 58 hergestellt ist, wobei N eine positive ganze Zahl und N $\geq$ 3 ist; und
    wobei der magnetische Stahl (5) an einer Umfangsfläche des Ventilkörpers (3) ummantelt ist, um die Umfangsfläche des Ventilkörpers (3) in zwei Bereiche zu unterteilen, und zwei Spulen (6) in den beiden Bereichen jeweils gewickelt und in Reihe zu einer Spule geschaltet sind.

2. Mikrominiatur-Verriegelungsventil mit Monospule nach Anspruch 1, wobei der Durchmesser der Kugel (2) und der Tiefe der Nut (4) eine Beziehung erfüllen:

$$\frac{\text{Durchmesser der Kugel - Tiefe der Nut}}{\text{Durchmesser der Kugel}} \times 100\,\% = 5\,\% \sim 30\,\%.$$

3. Mikrominiatur-Verriegelungsventil mit Monospule nach Anspruch 2, wobei der Durchmesser der Kugel (2) und der Tiefe der Nut (4) eine Beziehung erfüllen:

$$\frac{\text{Durchmesser der Kugel - Tiefe der Nut}}{\text{Durchmesser der Kugel}} \times 100\,\% = 5\,\% \sim 15\,\%.$$

4. Mikrominiatur-Verriegelungsventil mit Monospule nach Anspruch 1, wobei das kugelförmige Segment der hohlen Struktur eine Höhe im Bereich von 2/5 bis 3/5 des Durchmessers der Kugel aufweist.

5. Mikrominiatur-Verriegelungsventil mit Monospule nach Anspruch 1, wobei die Kugel (2) eine Siliziumnitrid-Keramikkugel ist.

6. Mikrominiatur-Verriegelungsventil mit Monospule nach Anspruch 1, wobei der Magnetstahl (5) in M Magnetstahlabschnitte mit gleichen Radien um eine Oberfläche des Ventilkörpers (3) unterteilt ist und die M Magnetstahlabschnitte gleichmäßig um die Oberfläche des Ventilkörpers (3) verteilt sind, wobei die beiden auf zwei Seiten des Magnetstahls (5) befindlichen Spulen (6) in einem Spalt zwischen zwei benachbarten Magnetstahlabschnitten zu einer Spule in Reihe geschaltet sind, wobei M eine positive ganze Zahl und M ≥ 3 ist.

7. Mikrominiatur-Verriegelungsventil mit Monospule nach Anspruch 6, wobei ein Bogenmaß von jedem der M magnetischen Stahlabschnitte von 55 Grad bis 65 Grad reicht und die Anzahl der magnetischen Stahlabschnitte von 3 bis 5 reicht.

8. Mikrominiatur-Verriegelungsventil mit Einzelspulenantrieb nach einem der Ansprüche 1 bis 7, wobei der Magnetstahl (5) an einer mittleren Position in einer axialen Richtung des Ventilkörpers (3) bereitgestellt ist, und eine Breite des Magnetstahls (5) in axialer Richtung des Ventilkörpers (3) im Bereich von 1 mm bis 3 mm liegt.

9. Mikrominiatur-Verriegelungsventil mit Monospule nach Anspruch 1, wobei der Durchmesser der Kugel (2) und der Durchmesser des Kugelsegments in der Nut (4) eine Beziehung erfüllen:

$$\frac{\text{Durchmesser des Kugelsegments - Durchmesser der Kugel}}{\text{Durchmesser der Kugel}} \times 100\,\% = 5\,\% \sim 25\,\%.$$

10. Mikrominiatur-Verriegelungsventil mit Monospule nach Anspruch 1, wobei die unteren Mittelpunkte der N Nuten (4) in derselben Ebene liegen, und die Ebene senkrecht zu einer Achse des Ankers (1) ist, und ein Abstand von der unteren Mittelpunkten der N Nuten (4) zu der Endfläche, nahe den jeweiligen Nuten des Ankers (1), im Bereich von 5 % bis 25 % einer axialen Länge des Ankers (1) liegt.

11. Mikrominiatur-Verriegelungsventil mit Monospule nach einem der Ansprüche 1 bis 7, 9 und 10, wobei drei Nuten (4), die gleichmäßig entlang der Umfangsrichtung verteilt sind, an Abschnitten in Umfangsrichtung nahe der Endfläche von jedem der beiden Enden des Ankers (1) angeordnet sind.

12. Mikrominiatur-Verriegelungsventil mit Monospule nach einem der Ansprüche 1 bis 7, 9 und 10, wobei die Ankeranordnung in dem inneren Hohlraum des Ventilkörpers (3) vorgesehen ist und ein Gleitpassungsspiel, der im Bereich von 0,03 mm bis 0,08 mm liegt, zwischen der Kugel (2) und einer Innenwand des Innenhohlraums des Ventilkörpers (3) ausgebildet ist.

**Revendications**

1. Vanne à verrouillage entraînée par une monobobine microminiaturisée, comprenant :

    un ensemble d'armature,
    un corps de vanne (3),
    un acier magnétique (5), et
    des bobines (6),
    l'ensemble d'armature étant disposé dans une cavité intérieure du corps de vanne (3), et l'ensemble d'armature comprenant une armature (1) et une bille (2), chaque élément parmi l'armature (1) et le corps de vanne (3) étant d'une structure de corps rotative, la balle (2) étant une bille sphérique ;
    les parties dans une direction circonférentielle proche d'une surface d'extrémité de chacune des deux extrémités de l'armature (1) étant pourvues de N rainures (4) uniformément réparties le long de la direction circonférentielle, une bille (2) étant disposée dans chacune des rainures (4) ;
    chacune des rainures (4) ayant une forme combinée d'un segment sphérique d'une structure creuse et d'un cylindre, le segment sphérique ayant un diamètre égal au diamètre du cylindre, et la bille (2) ayant un diamètre inférieur au diamètre du segment sphérique ou du cylindre dans la rainure (4), et supérieur à une profondeur de la rainure (4) ;
la bille (2) étant constituée d'un matériau non magnétique ayant une dureté HRC > 58, N étant un entier positif et N $\geq$ 3 ; et
l'acier magnétique (5) étant manchonné sur une surface circonférentielle du corps de vanne (3) de façon à diviser la surface circonférentielle du corps de vanne (3) en deux zones, et deux bobines (6) étant enroulées dans les deux zones respectivement et étant reliées en série dans une bobine.

2. Vanne à verrouillage entraînée par une monobobine microminiaturisée selon la revendication 1, dans laquelle le diamètre de la bille (2) et la profondeur de la rainure (4) satisfont la relation suivante :

$$\frac{\text{le diamètre de la bille} - \text{la profondeur de la rainure}}{\text{le diamètre de la bille}} \times 100\,\% = 5\,\% \sim 30\,\%.$$

3. Vanne à verrouillage entraînée par une monobobine microminiaturisée selon la revendication 2, dans laquelle le diamètre de la bille (2) et la profondeur de la rainure (4) satisfont la relation suivante :

$$\frac{\text{le diamètre de la bille} - \text{la profondeur de la rainure}}{\text{le diamètre de la bille}} \times 100\,\% = 5\,\% \sim 15\,\%.$$

4. Vanne à verrouillage entraînée par une monobobine microminiaturisée selon la revendication 1, dans laquelle le segment sphérique de la structure creuse a une hauteur comprise entre 2/5 et 3/5 du diamètre de la bille.

5. Vanne à verrouillage entraînée par une monobobine microminiaturisée selon la revendication 1, dans laquelle la bille (2) est une bille céramique en nitrure de silicium.

6. Vanne à verrouillage entraînée par une monobobine microminiaturisée selon la revendication 1, dans laquelle l'acier magnétique (5) est divisé en M sections d'acier magnétique ayant des radians égaux autour d'une surface du corps de vanne (3), les M sections d'acier magnétique étant uniformément réparties autour de la surface du corps de vanne (3), les deux bobines (6) situées sur deux côtés de l'acier magnétique (5) étant reliées en série dans une bobine au niveau d'un espace entre deux sections d'acier magnétique adjacentes, M étant un entier positif et M $\geq$ 3.

7. Vanne à verrouillage entraînée par une monobobine microminiaturisée selon la revendication 6, dans laquelle un radian de chacune des M sections d'acier magnétique est compris entre 55 et 65 degrés, et le nombre de sections d'acier magnétique est compris entre 3 et 5.

8. Vanne à verrouillage entraînée par une monobobine microminiaturisée selon l'une quelconque des revendications 1 à 7, dans laquelle l'acier magnétique (5) est disposé à une position intermédiaire dans une direction axiale du corps de vanne (3), et dans laquelle une largeur de l'acier magnétique (5) dans la direction axiale du corps de vanne (3) est comprise entre 1 et 3 mm.

9. Vanne à verrouillage entraînée par une monobobine microminiaturisée selon la revendication 1, dans laquelle le diamètre de la bille (2) et le diamètre du segment sphérique dans la rainure (4) satisfont la relation suivante :

$$\frac{\text{le diamètre du segment sphérique} - \text{le diamètre de la bille}}{\text{le diamètre de la bille}} \times 100\,\% = 5\,\% \sim 25\,\%.$$

10. Vanne à verrouillage entraînée par une monobobine microminiaturisée selon la revendication 1, dans laquelle les points centraux inférieurs des N rainures (4) sont dans un même plan, le plan étant perpendiculaire à un axe de l'armature (1), et une distance allant des points centraux inférieurs des N rainures (4) jusqu'à la surface d'extrémité, à proximité des rainures respectives, de l'armature (1) est comprise entre 5 et 25 % d'une longueur axiale de l'armature (1).

11. Vanne à verrouillage entraînée par une monobobine microminiaturisée selon l'une quelconque des revendications 1 à 7, 9 et 10, dans laquelle trois rainures (4) uniformément réparties le long de la direction circonférentielle sont disposées au niveau de parties dans la direction circonférentielle à proximité de la surface d'extrémité de chacune des deux extrémités de l'armature (1).

12. Vanne à verrouillage entraînée par une monobobine microminiaturisée selon l'une quelconque des revendications 1 à 7, 9 et 10, dans laquelle l'ensemble d'armature est disposé dans la cavité intérieure du corps de vanne (3), et un jeu d'ajustement coulissant compris entre 0,03 et 0,08 mm est formé entre la bille (2) et une paroi intérieure de la cavité intérieure du corps de vanne (3).

**Figure 1**

**Figure 2**

EP 3 330 584 B1

**Figure 3**

**Figure 4a**

**Figure 4b**

**Figure 4**

**Figure 5**

13

Figure 6a

Figure 6b

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610268235

- JP S5836680 U